# EUROPÄISCHE PATENTSCHRIFT

(11) **EP 2 193 333 B1**
(45) Veröffentlichungstag und Bekanntmachung des Hinweises auf die Patenterteilung: **02.10.2013**
(21) Anmeldenummer: 08785696.9
(22) Anmeldetag: 23.08.2008
(51) Int. Cl.: G01C 15/00

(54) **POSITIONSBESTIMMUNGSVERFAHREN**
POSITIONING METHOD
PROCÉDÉ DE DÉTERMINATION DE LA POSITION

(30) Priorität: 24.09.2007 EP 07117079
(43) Veröffentlichungstag der Anmeldung: 09.06.2010
(73) Patentinhaber: Leica Geosystems AG, 9435 Heerbrugg (CH)
(72) Erfinder: BÜHLMANN, Andreas, CH-3658 Merlingen am Thunersee (CH); STEMPFHUBER, Werner, CH-8102 Oberengstringen (CH); STEGER, Urs, CH-9423 Altenrhein (CH); DESMOND, Matthew, CH-9445 Rebstein (CH)
(74) Vertreter: Kaminski Harmann
(86) Internationale Anmeldenummer: PCT/EP2008/006944
(87) Internationale Veröffentlichungsnummer: WO 2009/039929

(56) Entgegenhaltungen:
- EP-A- 1 079 029
- EP-A- 1 464 981

## Beschreibung

Die Erfindung betrifft ein Positionsbestimmungsverfahren mit einer mobilen, mit einem GNSS-Empfänger ausgestatteten Einheit und einer Totalstation nach dem Oberbegriff des Anspruchs 1.

Eine präzise Positionsbestimmung bewegter Einheiten findet in vielen Bereichen Verwendung. Beispielsweise ist es mittels moderner und präziser Positionsbestimmungstechniken bei Arbeiten mit mobilen Arbeitsmaschinen möglich, eine hohe Arbeitsgenauigkeit, d.h. je nach Gegebenheiten sowohl in Höhe als auch in Position, und einen hohen Automatisierungsgrad zu erreichen. So konnten durch die Einführung von effizienten und für hohe Arbeitsleistungen ausgelegte Arbeitsmaschinen im Bereich des Strassen- und Tiefbaus, der Baulanderschliessung und des Tagebaus in den letzten Jahrzehnten grosse Fortschritte bezüglich der Arbeitsgeschwindigkeit erzielt werden. Unter Verwendung von automatisierten Verfahren können die mobilen Arbeitsmaschinen einer computergenerierten Soll-Kontur folgen, indem die jeweiligen Ist-Positionen der mobilen Arbeitsmaschinen mit den Soll-Positionen, die sich aus dem computergenerierten Soll-Modell ergeben, verglichen und entsprechende Interaktionen ausgelöst werden. Neben ebenen Flächen sind somit ebenfalls beliebige unebene Konturen herstellbar. Einen wesentlichen Bestandteil bildet hierbei die Positionsbestimmungstechnik der einzelnen Arbeitsmaschinen.

Als mobile Einheiten sind hierbei sämtliche ihre Position verändernde Einheiten wie Arbeitsmaschinen und insbesondere Erdbewegungs- und Planierungsmaschinen, materialausbringende oder -formende Maschinen, wie z.B. Asphalt-Paver, Markiermaschinen, Materialbeförderungsmaschinen oder Personenbeförderungsmaschinen zu verstehen.

Ebenso werden präzise Positionsbestimmungsverfahren mit Hilfe einer Totalstation auch in anderen Bereichen, wie beispielsweise der Vermessungstechnik, angewendet.

Eine mögliche, moderne Technik zur verhältnismässig genauen Bestimmung der Position einer mobilen Arbeitsmaschine stellen Satelliten-Positionsbestimmungssysteme wie beispielsweise GPS, GLONASS oder das im Aufbau befindliche Galileo-System dar. Im Folgenden wird als Überbegriff für alle satellitengestützten Positionierungssysteme stets die Bezeichnung GNSS (Global Navigation Satellite System) verwendet. Zur Positionsbestimmung wird eine GNSS-Empfangseinheit an der mobilen Arbeitsmaschine angebracht, wodurch mit einer Genauigkeit von einigen Metern die absolute Position der Arbeitsmaschine bestimmbar ist. Da diese Genauigkeit für viele Anwendungen nicht ausreicht, kommen aus der GNSS-Technik seit längerem bekannte Verfahren zur Erhöhung der Positionsgenauigkeit zur Anwendung, wie beispielsweise differenzielles GNSS oder RTK. Bei diesen Verfahren werden beispielsweise von einer Referenzstation direkt oder indirekt Korrekturwerte ausgesendet, welche die insbesondere von Refraktion in der Ionosphäre und Troposphäre herrührenden empfangsortspezifischen Fehler in den Satellitensignalen wiedergeben. Durch gleichzeitiges Empfangen der mit Fehlern behafteten Satellitensignale und der von der nahe gelegenen Referenzstation ausgesendeten Korrekturwerte durch die an der mobilen Arbeitsmaschine angebrachten GNSS-Empfangseinheit ist eine zum Teil zentimetergenaue Positionsbestimmung möglich.

Je nach angewendetem Verfahren können allerdings bei der GNSS-Positionsbestimmung verschiedene Genauigkeitsprobleme auftreten. Insbesondere aufgrund von Multipath-Effekten oder Geschwindigkeitsproblemen, etwa wenn die Phasenmehrdeutigkeit schnell gelöst werden muss, können die ermittelten GNSS-Positionen Ungenauigkeiten aufweisen.

Ein weiteres systembedingtes Problem der GNSS-Technik besteht darin, dass die zu erreichende Messgenauigkeit in vertikaler Richtung geringer ist als die Messgenauigkeit in horizontaler Richtung. Da jedoch in der Regel, insbesondere im Bereich des Strassenbaus, die Anforderungen an die Bearbeitungsgenauigkeit in vertikaler Richtung grösser sind als an die Bearbeitungsgenauigkeit in horizontaler Richtung, da ungewollte Unebenheiten und Welligkeiten auf jeden Fall zu vermeiden sind, ist der alleinige Einsatz von GNSS-Positionsbestimmungssystemen oft nicht ausreichend. Zudem muss zur Positionsbestimmung via GNSS stets Sichtkontakt zu mindestens drei, vorzugsweise mindestens vier Satelliten bestehen, was jedoch vor allem bei Arbeiten unter Brücken, in engen Häuserfluchten oder aufgrund anderer Abschattungen nicht der Fall ist.

Infolgedessen kann trotz der Existenz moderner Satellitenpositionsbestimmungssysteme der, insbesondere zusätzliche, Einsatz von hochpräzisen optischen Messverfahren, wie sie aus der Geodäsie bekannt sind, weiterhin Vorteile bieten.

Seit längerem werden daher zur exakten Regelung der Arbeitshöhe von mobilen Arbeitsmaschinen Rotationslasersysteme verwendet, die einen im Wesentlichen in der horizontalen Ebene rotierenden Laserstrahl erzeugen. Hierdurch wird eine ebene Quasilaserscheibe erzeugt, die eine Sollebene für mindestens eine mobile Arbeitsmaschine definiert. Der rotierende Laserstrahl wird von einem auf der Arbeitsmaschine montierten Empfänger, der beispielsweise aus mehreren vertikal verteilten Detektoren besteht und gegebenenfalls höhenverstellbar ist, empfangen, wodurch hochgenau eine Höheninformation gewonnen werden kann. Ist auch die Position gewünscht, wird diese oft zusätzlich mit Hilfe von GNSS-Systemen ermittelt.

Allerdings ist anhand dieses Verfahrens meist nur ein Vorgeben einer Höheninformation für die mobile Arbeitsmaschine möglich. GNSS-Ungenauigkeiten in einer horizontalen Ebene bleiben dabei jedoch unberücksichtigt und GNSS-Signalausfälle beispielsweise unter Brücken können nicht kompensiert werden. Ebenso können keine Arbeitspfade mit gewünschten Welligkeiten vorgegeben werden.

Eine weitere Möglichkeit zur exakten Positionsbestimmung ist das hinlänglich bekannte optische Vermessen, insbesondere mit automatischer Zielverfolgung, eines an der mobilen Arbeitsmaschine angebrachten Reflektors mittels eines eine Entfernungs- und Winkelmessfunktionalität aufweisenden geodätischen Geräts, wobei sogar für Entfernungen von mehreren hundert Metern Genauigkeiten im Subzentimeterbereich erreichbar sind.

Allgemein bekannte Beispiele für solche Vermessungsgeräte bzw. geodätische Geräte stellen ein Theodolit oder eine Totalstation dar. Eine Übersicht über geodätische Messvorrichtungen des Stands der Technik bieten "Elektronische Entfernungs- und Richtungsmessung" von R. Joeckel und M. Stober, 4. Auflage, Verlag Konrad Wittwer, Stuttgart 1999. Solche Geräte verfügen über Winkel- bzw. Richtungs- und/oder Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung meist noch mit einem äusseren Bezugssystem verknüpft werden.

Ergänzend kann eine zu vermessende Maschine zusätzlich einen GNSS-Empfänger aufweisen, wodurch Messausfälle des geodätischen Geräts, beispielsweise durch Störung des direkten Sichtkontakts zur Arbeitsmaschine, oder des GNSS, beispielsweise unter Brücken oder in engen Häuserschluchten, gegenseitig kompensiert werden können.

So kann zwar durch ein automatisches Zielverfolgen eines der Arbeitsmaschine zugeordneten Reflektors ein hoher Automatisierungsgrad beim Vermessungsvorgang selbst erreicht werden, nicht jedoch beim Verknüpfen des inneren und äusseren Bezugssystems. Daher ist zuvor meist ein aufwändig und fachmännisch durchgeführtes Aufstellen und Initialisieren des geodätischen Geräts mit einer präzisen Einmessung notwendig.

Das Dokument EP 1 464 981 A2 zeigt z.B. ein Positionsbestimmungsverfahren, bei dem GPS-Messpunkte in einem globalen Bezugssystem (WGS84) aufgenommen werden. Mit GPS unerreichbare Punkte werden mit einer Laser-Totalstation in einem lokalen Bezugssystem erfasst. Diese Punkte werden in die global referenzierten Messpunkte integriert, wobei zur Ermittlung geeigneter Transformationsparameter Referenzpunkte sowohl mittels GPS als auch mit der Totalstation vermessen und verknüpft werden müssen.

Grundsätzlich kann die absolute, in einem äusseren Bezugssystem zu bestimmende Position des Messgerätes aus Messungen zu bekannten, fixen Messpunkten abgeleitet werden. Dazu wird zuerst die Position der umliegenden Messpunkte relativ zum Standpunkt des geodätischen Geräts in einem lokalen, inneren Bezugssystem berechnet. Mit Hilfe der bekannten absoluten Koordinaten der Messpunkte werden, wenn mehr als die notwendige Anzahl Messungen vorliegen, ausgeglichene Transformationsparameter berechnet, woraus dann sämtliche im inneren Bezugssystem bekannte, lokale Relativpositionen in Relation zu dem äusseren Bezugssystem gebracht werden können.

Beispielsweise wird in der europäischen Patentanmeldung mit der Anmeldenummer 07107973.5, der Veröffentlichungsnummer EP1990607A1 und dem Titel "Positionsbestimmungsverfahren für ein geodätisches Gerät" ein Verfahren zum automatisierten Ableiten von solchen ausgeglichenen Transformationsparametern beschrieben, wobei dazu eine Zuordnung von gemessenen Relativpositionen zu entsprechenden Referenzpositionen von Referenzpunkten anhand der bekannten relativen Lage der Referenzpunkte zueinander erfolgt.

Das Ableiten einer ausgeglichenen Beziehung zwischen zwei Bezugssystemen kann an einem Beispiel veranschaulicht werden: Distanzen und Richtungen werden zu einigen umliegenden Punkten gemessen und die Position dieser Punkte relativ zum Standort, d.h. in einem lokalen Koordinatensystem, auf einer Klarsichtfolie aufgetragen. Eine Karte des gewünschten Koordinatensystems wird nun dieser Folie unterlegt. Dieses System kann das Landeskoordinatensystem oder aber auch das Koordinatensystem eines spezifischen Bauprojektes sein. Auf dieser Karte sind nun auch die Messpunkte zu finden. Die Folie wird gedreht und verschoben, bis die Folienpunkte möglichst gut mit den auf der Karte eingezeichneten Punkten übereinstimmen, was algorithmisch durch Ausgleichungsrechnung nach der Methode der kleinsten Quadrate erfolgen kann. Die Koordinaten der lokalen Relativpunkte können nun auf der Karte abgelesen werden. Dieses Prinzip wird dabei in der Praxis nicht graphisch, sondern analytisch angewandt, wobei stets die Punktnummer eines Messpunktes und die Messwerte vom geodätischen Gerät zu diesem Messpunkte bekannt und zugeordnet sein müssen.

Die hierfür erforderlichen Berechnungen sind softwaremässig in den meisten modernen Totalstationen bzw. Tachymetern integriert. Dies bedeutet aber immer noch, dass in einem äusseren Bezugssystem bekannt positionierte, anmessbare Messpunkte existieren und deren Punktnummern verknüpft eingegeben werden müssen. Die Koordinaten des Standortes des geodätischen Geräts und andere gewünschte Ergebnisse werden dann automatisch aus den Messungen berechnet und können gespeichert oder ausgegeben werden. Die minimale Anzahl an Messungen zu bekannten Messpunkten bei dreidimensionalen, einen gemeinsamen Massstab aufweisenden Systemen, die für solche Berechnung erforderlich sind, umfasst die Bestimmung von jeweils Distanz und Richtung zu zwei Messpunkten. In der Praxis werden jedoch, sofern möglich, darüber hinausgehende Messungen durchgeführt, um durch Überbestimmung Angaben über die Zuverlässigkeit der Resultate zu erhalten.

In der Fachliteratur werden solche zu geodätischen Zwecken durchgeführte Transformationen von Koordinaten aus einem ersten, beispielsweise inneren Bezugssystem in ein zweites, beispielsweise äusseres Bezugssystem als Helmert-Transformation bezeichnet.

Berechnungen, mit denen aus Messungen von Richtung und Distanz zu mehr als zwei Fixpunkten eine Relation zwischen zwei Bezugssystemen bestimmt werden soll, können zum Beispiel mit einer Ausgleichung nach der Gaußschen Methode der kleinsten Quadrate erfolgen, wobei die Relation durch Transformationsparameter ausgedrückt werden kann.

Das Aufstellen einer Totalstation und das damit verbundene Einmessen bekannter Messpunkte, die bei Anwendung dieser Methode notwendiger Weise existieren müssen, sind bezüglich einer Benutzerführung zumeist auf den ausgebildeten Vermessungsingenieur zugeschnitten. Der Anwender muss die zur Berechnung der Relation zwischen innerem und äusserem Bezugssystem verwendeten Messpunkte im Feld sicher identifizieren und ihnen die korrekten Punktnummern, welche die Verknüpfung mit der Position des Messpunktes herstellen, zuweisen. Dies ist in der Regel nur mit einem Plan möglich, in welchem Gelände und Messpunkte eingetragen sind. Ein entsprechendes manuelles Zuweisen von aktueller Messung zu Messpunkt ist somit zeitaufwändig und fehlerbehaftet.

Zudem erfordern spezielle Anwendungen, wie z.B. der Einsatz von Totalstationen zur Steuerung mobiler Baumaschinen, dass auch nicht speziell ausgebildete Vermessungsfachleute die Geräte bedienen müssen. Bisherige Gerätekonfigurationen und Benutzerführungen sind auf diese Anwendergruppe jedoch nicht zugeschnitten.

Positionsbestimmungsverfahren des Stands der Technik mit Hilfe von optischen geodätischen Geräten basieren somit auf dem Vermessen bekannt positionierter Messpunkte, deren Messwerte zusammen mit der Punktnummer oder den Positionsdaten der Messpunkte aufgenommen bzw. weiterverarbeitet werden. Diese notwendige Zuordnung von Messwerten zu Punkten bei der Messung verzögert das Verfahren, erhöht die Fehleranfälligkeit und erschwert die Automatisierbarkeit.

Eine Aufgabe der vorliegenden Erfindung besteht deshalb darin, ein verbessertes und vereinfachtes Positionsbestimmungsverfahren für eine mobile Arbeitsmaschine bereitzustellen.

Eine weitere Aufgabe der vorliegenden Erfindung besteht in der Verringerung der Fehleranfälligkeit und des Zeitbedarfs für das Initialisieren und Stationieren eines optischen geodätischen Geräts.

Eine weitere Aufgabe der vorliegenden Erfindung besteht darin, eine einfache automatisierte Positionsbestimmung einer Baumaschine mit Hilfe eines geodätischen Gerätes mit Winkel- und Entfernungsmessfunktionalität zu ermöglichen.

Diese Aufgaben werden durch die Verwirklichung der Verfahrensmerkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe Positionierverfahren ermöglicht eine Verknüpfung einer GNSS-Positionsbestimmung mit einer Positionsbestimmung anhand eines geodätischen Geräts sowie eine damit verbundene Nutzung jeweils der Vorteile beider Verfahren. So wird gemäss der Erfindung ermöglicht, dass eine zur Vermessung einer bewegten Arbeitsmaschine verwendete Totalstation ohne vorheriges Bestimmen der absoluten Position derselben sofort mit dem, insbesondere automatischen, Messen von Entfernungen und Winkeln zu einem der Maschine zugeordneten Referenzpunkt beginnen kann.

Voraussetzung des Verfahrens ist, dass die bewegte Maschine eine Positionsbestimmungsvorrichtung wie einen GNSS-Empfänger aufweist, mit welchem mindestens zu einigen Zeitpunkten eine Positionsbestimmung möglich ist.

Vorteilhafterweise in Echtzeit werden dann erfindungsgemäss für bekannte Zeitpunkte GNSS-Positionen als Referenzpositionen der sich fortbewegenden Arbeitsmaschine und Relativpositionen des der Arbeitsmaschine zugeordneten Bezugspunktes mittels der Totalstation bestimmt. Die GNSS-Positionen beziehen sich dabei auf ein äusseres und die Relativpositionen auf ein inneres, totalstationsbezogenes Koordinatensystem. Mindestens teilweise werden für gleiche oder zeitlich nah beieinander liegende Zeitpunkte sowohl eine GNSS-Position als auch eine Relativposition bestimmt, wobei die sich zeitlich entsprechenden Positionen jeweils paarweise einander zugeordnet werden und somit ein zeitlich korreliertes Positionspaar jeweils für einen oder zwei benachbarten Zeitpunkt bilden.

Die zeitliche Verknüpfung und der maximal zulässige zeitliche Abstand der GNSS- und der Relativposition sind abhängig von der gewünschten Positionierungsgenauigkeit sowie den Maschinenparametern, insbesondere der typischen Maschinendynamik. In vielen Fällen sind diese Grössen auch miteinander verknüpft, da beispielsweise eine langsam fahrende Maschine die eine hochpräzise Oberfläche ausbringen oder formen soll auf der einen Seite eine höhere Genauigkeit benötigt, auf der anderen Seite aber auch nur geringe Positionsveränderungen pro Zeiteinheit aufweist. Demgegenüber gelten für eine nur grob planierende schnellfahrende Maschine andere Genauigkeitsanforderungen, wobei diese Maschine aber auch grössere Ortsveränderungen pro Zeiteinheit aufweist. Im allgemeinen gilt somit, dass hohe Geschwindigkeit und hohe Genauigkeitsanforderungen an die Positionsbestimmung einen zeitlich geringeren Abstand zwischen den Messungen zulassen als langsame Geschwindigkeiten und geringere Genauigkeitsanforderungen. Durch diese zeitliche Zuordnung der GNSS- und Relativposition innerhalb eines dynamik- und genauigkeitsabhängigen maximal zulässigen Zeitfensters sind auch unterschiedliche Raten für die beiden Messprinzipien realisierbar. Insbesondere können die Messungen zu den Relativpositionen langsamer oder schneller als die GNSS-Updateraten erfolgen. Hierbei können auch zwischen den Positionen einer Messreihe jeweils dem anderen Messprinzip zuzuordnende Positionen extra- bzw. interpoliert werden, z.B. in einem stückweise linearen Ansatz.

Aus den Korrelationen jeweils der einzelnen Positionspaare kann nun eine ausgeglichene Beziehung zwischen äusserem und innerem Bezugssystem abgeleitet werden, wobei diese Beziehung insbesondere durch ausgeglichene Transformationsparameter dargestellt wird. Beispielsweise kann das Ableiten dieser Beziehung anhand einer Ausgleichsrechnung nach der Gaußschen Methode der kleinsten Quadrate erfolgen, wobei prinzipiell sämtliche nach dem Stand der Technik bekannten Ausgleichsrechnungsmethoden Verwendung finden können.

Die abgeleitete ausgeglichene Beziehung gibt nun an, wie das äussere Bezugssystem mit dem inneren, totalstationsbezogenen Bezugssystem zusammenhängt. Anhand dieser Beziehung können nun zum Beispiel die Koordinaten der mit der Totalstation gemessenen Relativpositionen oder die Position der Totalstation selbst in das äussere Bezugssystem transformiert und zur Positionsbestimmung der Arbeitsmaschine im äusseren Bezugssystem verwendet werden.

Eine zeitabhängige Bestimmung von GNSS-Positionen ist nach dem Stand der Technik bekannt. Dazu weist die mobile Arbeitsmaschine einen GNSS-Empfänger auf, dessen Position - insbesondere fortlaufend und mit einer bestimmten, nicht notwendigerweise bekannten Frequenz - automatisch in einem äusseren Bezugssystem ermittelt wird. Ebenso könnten aus den direkt ermittelten GNSS-Positionen zusätzlich weitere GNSS-Positionen für Zwischenzeitpunkte bestimmt werden, was zum Beispiel mittels eines Ableitens einer Trajektorie erfolgen kann.

Das Bestimmen der Relativpositionen des anmessbaren Bezugspunkts, der in fester räumlicher Beziehung zum GNSS-Empfänger der Arbeitsmaschine steht und insbesondere als gerichteter Reflektor, Rundumreflektor oder 360°-Prisma ausgebildet ist, erfolgt durch ein Messen der Entfernung und mindestens eines und insbesondere zweier Raumwinkel von der Totalstation zum Bezugspunkt.

Im Regelfall werden die GNSS-Positionen und die Relativpositionen im Dreidimensionalen bestimmt, wobei dann als ausgeglichene Beziehung im Allgemeinen sieben Transformationsparameter, davon drei Verschiebungen, drei Drehungen und ein Massstab, zu bestimmen sind. Zur Berechnung dieser Parameter ist, bei gleichem Massstab der Bezugssystem, theoretisch eine minimale Anzahl von zwei einander zugeordneten Positionspaaren aus jeweils einer GNSS-Position und einer für einen gleichen Zeitpunkt bestimmten Relativposition notwendig. Anhand einer Bestimmung weiterer sich zeitlich entsprechender Positionspaare können, wie oben beschrieben, anhand einer Ausgleichsrechnung ausgeglichene Transformationsparameter abgeleitet werden. Insbesondere kann eine solche Ausgleichsrechnung automatisch nach jedem weiteren Bestimmen eines sich zeitlich entsprechenden, einander zugeordneten Positionspaares oder in einem festgesetzten Rhythmus durchgeführt werden, wonach die ausgeglichenen Transformationsparameter jeweils wieder aktualisiert berechnet und dadurch verfeinert werden können. Dabei kann zusätzlich eine Plausibilitätskontrolle der mittels der Totalstation und GNSS durchgeführten Positionsbestimmungen erfolgen, wobei zum Beispiel "Ausreisser", d.h. unplausible Positionen, eliminiert werden und für ein aktualisiertes Ableiten der ausgeglichenen Beziehung unberücksichtigt bleiben.

Ist eine Positionsbestimmung der Arbeitsmaschine nur im Zwei- oder Eindimensionalen erforderlich, reduzieren sich die zu berechnenden Transformationsparameter entsprechend, was z.B. auf einer ausgedehnten Ebene, wie beispielsweise einem Flugfeld der Fall sein kann.

Da die als Referenzpunkte dienenden GNSS-Positionsbestimmungen in vertikaler Richtung Ungenauigkeiten aufweisen und somit die darauf basierenden ausgeglichenen Transformationsparameter ebenso nur mit geringerer Bestimmtheit abgeleitet werden können, kann zusätzlich ein Bezug zu einer bekannten Höhe hergestellt werden. Beispielsweise kann dies durch zusätzliches Anmessen eines in bekannter Höhe positionierten Fixpunktes erfolgen, wobei dies dann beim Ableiten der ausgeglichenen Transformationsparameter berücksichtigt wird. Die damit ins äussere Bezugssystem transformierten Relativpositionen können dann eine sehr genaue Angabe für die wahre absolute Position der Arbeitsmaschine darstellen.

Bei einem Ausfall eines Systems, beispielsweise bei einer Position der Arbeitsmaschine unter einer Brücke, wo eine GNSS-Positionsbestimmung unmöglich ist, kann weiterhin eine Positionsbestimmung der Arbeitsmaschine gewährleistet werden. In einem solchen Fall können weitere Relativpositionen anhand der Totalstation bestimmt werden, die anhand der ausgeglichenen Beziehung zu absoluten Positionen umgerechnet werden können.

Eine weitere Verwendungsmöglichkeit des erfindungsgemässen Verfahrens ist das Verbessern oder Ersetzen der mittels GNSS bestimmten, im Allgemeinen geringere Genauigkeiten aufweisenden GNSS-Positionen durch die transformierten, üblicher Weise genauer bestimmten Relativpositionen. Beispielsweise können auch nur einzelne Koordinaten, insbesondere in vertikaler Richtung, der GNSS-Positionen durch entsprechende Koordinaten der transformierten Relativpositionen ersetzt werden. Ebenso möglich ist ein Kombinieren der durch GNSS und Totalstation bestimmten Positionsinformationen, sodass eine genauere Näherung für die wahre Position der Arbeitsmaschine und den wahren zurückgelegten Weg berechnet werden kann oder auch die Einbeziehung von historischen Positionsdaten der bisher durchfahrenen Trajektorie. Hierfür können dem Fachmann bekannte Verfahren, wie beispielsweise ein Kalman-Filter, verwendet werden.

Verallgemeinert ausgedrückt werden erfindungsgemäss durch eine bewegte Komponente mit darauf befindlicher Positionsbestimmungsvorrichtung Referenzpunkte generiert, die durch die Totalstation angemessen werden können. Die Positionsbestimmungsvorrichtung muss dabei nicht notwendiger Weise ein GNSS-Empfänger sein, jedoch die Funktion erfüllen, nacheinander Positionen in einem äusseren Bezugssystem zu liefern. Realisierbar wären hier z.B. auch Fahrzeugnavigationssysteme mit INS und Koppelnavigation. Die gelieferten absoluten Positionen der fortbewegten Komponente werden dann zur Herstellung eines Bezuges der Position der Totalstation zu einem äusseren System verwendet.

Somit ermöglicht das Verfahren ein freies Positionieren einer Totalstation ohne vorheriges Einmessen von Bezugspunkten, wobei sofort mit dem, insbesondere automatisierten, Vermessungsvorgang begonnen werden kann. Speziell ausgebildetes Fachpersonal ist für das Aufstellen und Initialisieren der Totalstation nicht zwingend erforderlich. Eine Stationierung der Totalstation, d.h. ein in Bezug Bringen der totalstationsbezogenen Messungen mit einem äusseren Bezugssystem, kann nun automatisch erfolgen, sobald mindestens zu zwei Zeitpunkten unterschiedliche Positionen der bewegten Komponente durch die Totalstation gemessen wurden, zu welchen Zeitpunkten auch Positionen durch die Positionsbestimmungsvorrichtung bestimmt sind. Im weiteren Arbeitsvorgang kann nun die Stationierung dynamisch verbessert und eine Abweichung oder Fehlereinschätzung angegeben werden.

Grundsätzlich kann das Verfahren jedoch auch ohne ein dynamisches Element, für welches zeitlich korrelierte Positionspaare aus einer Relativposition und einer absoluten Referenzposition erzeugt werden, angewendet werden. So könnten die durch GNSS bestimmten Referenzpositionen, die zum Ableiten der ausgeglichenen Beziehung zwischen totalstationsbezogenem und äusserem Bezugssystem notwendig sind, zum Beispiel auch mehrere Referenzpunkte darstellen, deren Position im äusseren Bezugssystem bekannt sind. Das Identifizieren und Zuordnen der Referenzpunkte zu entsprechenden Relativpositionen, das gemäss oben Beschriebenem anhand identischer Zeitpunkte, für die die Positionen bestimmt sind, erfolgt, erfolgt dann allerdings beispielsweise durch den Benutzer. Jedoch kann entsprechend dem erfindungsgemässen Verfahren die Reihenfolge des sequentiellen Anmessens von zu vermessenden Neupunkten und Referenzpunkten unbeachtet bleiben. Dagegen werden bei Verfahren des Standes der Technik zuerst die bekannten Referenzpunkte vermessen, daraufhin ausgeglichene Transformationsparameter abgeleitet und anschliessend wird erst mit dem Vermessen der Neupunkte begonnen.

Zum Beispiel können anhand der Totalstation sofort verschiedenste Neupunkte, deren Absolutpositionen zu bestimmen sind, sequentiell angemessen und dadurch deren Relativpositionen im inneren, totalstationsbezogenen Bezugssystem bestimmt werden. Damit diese gemessenen Relativpositionen einen Bezug zum äusseren Bezugssystem erhalten, kann nun, ohne eine Reihenfolge zu beachten, vor, zwischen oder nach dem sequentiellen Anmessen der Messpunkte jeweils ein Einmessen eines oder mehrerer Referenzpunkte erfolgen. Dabei ist allerdings zusätzlich ein Identifizieren und Zuordnen dieser Referenzpunkte notwendig. Sobald im Messverlauf mindestens zwei Referenzpunkte vermessen und zu bestimmten Relativpositionen zugeordnet sind, können Transformationsparameter abgeleitet werden und anhand dieser rückwirkend alle bereits gemessenen Relativpositionen in das äussere Bezugssystem transformiert werden. Werden im weiteren Arbeitsvorgang weitere bekannte Referenzpunkte vermessen und identifiziert, so können die Transformationsparameter erneut und aktualisiert abgeleitet werden, woraufhin auch alle bereits bestimmten Relativpositionen der Messpunkte aktualisiert ins äussere Bezugssystem transformiert und somit deren absolute Positionsangaben verbessert werden können.

Demgemäss kann eine Messreihenfolge von sequentiell zu vermessenden Referenz- und Neupunkten frei durch den Benutzer festgesetzt werden. Beispielsweise könnte die Messreihenfolge durch die Raumrichtung der jeweiligen Punkte festgelegt werden, etwa im Sichtfeld von links nach rechts. So kann ein Verwechseln oder unbeabsichtigtes zweimaliges Anmessen von zu vermessenden Punkten verhindert werden. Ebenso denkbar ist, dass ein Sichtkontakt eines bekannten Referenzpunktes zur Totalstation versperrt ist und erst im späteren Arbeitsverlauf frei wird, beispielsweise bei Gebäudeabrissarbeiten. Dieser bekannte Referenzpunkt könnte dann später vermessen, daraufhin die ausgeglichenen Transformationsparameter aktualisiert und rückwirkend von allen zuvor bestimmten Relativpositionen aktualisiert eine absolute Position berechnet werden.

Das erfindungsgemässe Verfahren wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein Bauarbeitenszenario im Gelände mit einer mobilen Arbeitsmaschine und einer die Position der Arbeitsmaschine bestimmenden Totalstation;
- Fig.2a-c: ein veranschaulichendes Beispiel für das erfindungsgemässe Positionsbestimmungsverfahren;
- Fig.3: ein beispielhaftes Ableiten von ausgeglichenen Transformationsparameter beim erfindungsgemässen Positionsbestimmungsverfahren;
- Fig.4a-c: ein weiteres veranschaulichendes Beispiel für das erfindungsgemässe Positionsbestimmungsverfahren und
- Fig.5a-b: zwei Beispiele für unterschiedliche Raten bei der Bestimmung von GNSS- und Relativpositionen beim erfindungsgemässen Positionsbestimmungsverfahren.

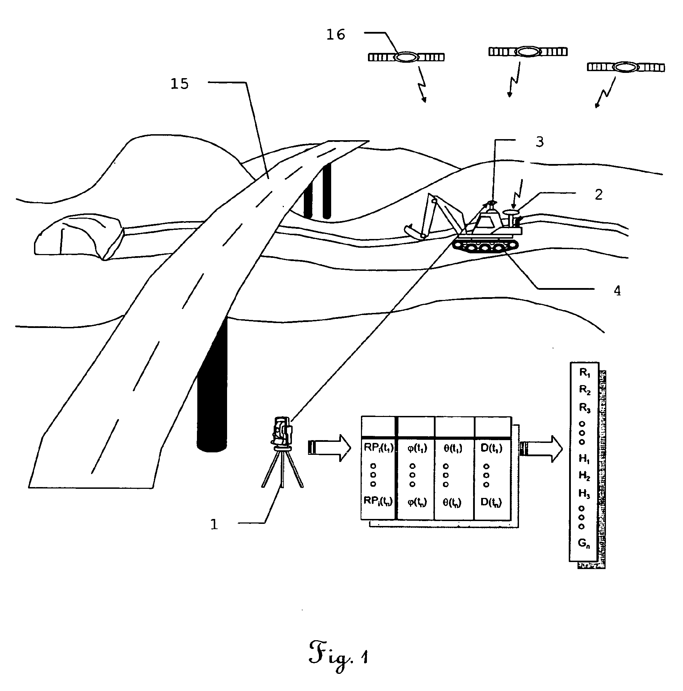

Fig.1 zeigt ein typisches Szenario bei Strassenbauarbeiten, wobei die Position einer mobilen Arbeitsmaschine 4, beispielsweise zum Steuern derselben, fortlaufend bestimmt werden soll. Wie nach dem Stand der Technik bekannt, weist die mobile Arbeitsmaschine dafür einen GNSS-Empfänger 2 und ein dem GNSS-Empfänger 2 räumlich fest zugeordnetes Rundumprisma 3 als optisch anmessbaren Bezugspunkt auf. Um zum Beispiel auch unter einer Brücke 15 Positionen der Arbeitsmaschine zu erhalten, wird im Gelände eine Totalstation 1 zum automatischen Zielverfolgen des an der Arbeitsmaschine 4 befestigten Rundumprismas 3 an einer beliebigen Position aufgestellt.

Gemäss der Erfindung werden nun zeitlich korrelierte Positionspaare erzeugt. Dazu werden durch die bewegte Arbeitsmaschine 4 Referenzpunkte generiert, deren Positionen sowohl mittels des GNSS-Empfängers basierend auf GNSS-Signalen absolut, als auch mittels der Totalstation 1 relativ bestimmt werden. Hierfür misst die Totalstation jeweils zwei Winkel ϕ,θ und die Entfernung D von der Totalstation 1 zur Arbeitsmaschine, insbesondere zu einem daran befestigten Rundumprisma 3 als Bezugspunkt. Die Winkel ϕ,θ und die Entfernung D definieren nun jeweils Relativpositionen RPᵢ des Bezugspunktes für bekannte Zeitpunkte t₁,t₂,... in einem totalstationsbezogenen, inneren Bezugssystem. Da für gleiche Zeitpunkte auch absolute GNSS-Positionen GP_{ä} des GNSS-Empfängers 2 im äusseren Bezugssystem ermittelt werden, können nun die für gleiche Zeitpunkte bestimmten Absolut- und Relativpositionen jeweils paarweise einander zugeordnet werden und bilden somit Positionspaare. Insbesondere erfolgt diese Bestimmung der Relativ- und GNSS-Positionen während den Arbeiten fortlaufend.

Gesucht ist eine Beziehung zwischen dem inneren und dem äusseren Bezugssystem, beispielsweise zum Umrechnen der Relativpositionen in absolute Positionen. Diese Beziehung, die insbesondere anhand von 6 Transformationsparametern angegeben werden kann, kann nun aus den einzelnen Verknüpfungen jeweils zwischen einander zugeordneten Relativ- und GNSS-Positionen hergeleitet werden. Sind mehr als zwei Positionspaare erzeugt, so wird die gesuchte Beziehung ausgeglichen abgeleitet, d.h. anhand einer Ausgleichsrechnung wie beispielsweise nach der Gaußschen Methode der kleinsten Quadrate.

Insbesondere wird das Verfahren fortlaufend durchgeführt, sodass ständig weitere Relativpositionen und GNSS-Positionen gemessen werden. Sobald ein weiteres Positionspaar erzeugt ist, kann eine aktualisierte, verbesserte ausgeglichene Beziehung aus den bereits bestehenden Verknüpfungen der Positionspaare sowie der neu hinzugekommenen Verknüpfung abgeleitet werden. Ausserdem können sämtliche im inneren Bezugssystem ermittelten Grössen, wie die bisher bestimmten Relativpositionen, erneut und verbessert anhand der aktualisierten Beziehung in das äussere Bezugssystem transformiert werden.

Dieses Verfahren kann, sofern eine Datenaustauschmöglichkeit zwischen der Totalstation und dem GNSS-Empfänger besteht, sowohl in Echtzeit als auch vollautomatisch durchgeführt werden, sodass die Totalstation automatisch stationiert, d.h. in Bezug zu einem äusseren Bezugssystem gebracht, wird. Bei fortlaufender Durchführung des Verfahrens verbessert und aktualisiert sich dabei die Stationierung dynamisch im Verlauf des Arbeitsvorganges.

Sämtliche im inneren Bezugssystem bestimmte Grössen, wie zum Beispiel Relativpositionskomponenten, darunter insbesondere Höhenpositionskomponenten, Relativpositionsänderungsvektoren, Geschwindigkeitsvektoren und/oder die relative Position der Totalstation können nun mittels der berechneten ausgeglichenen Beziehung in das äussere Bezugssystem transformiert werden.

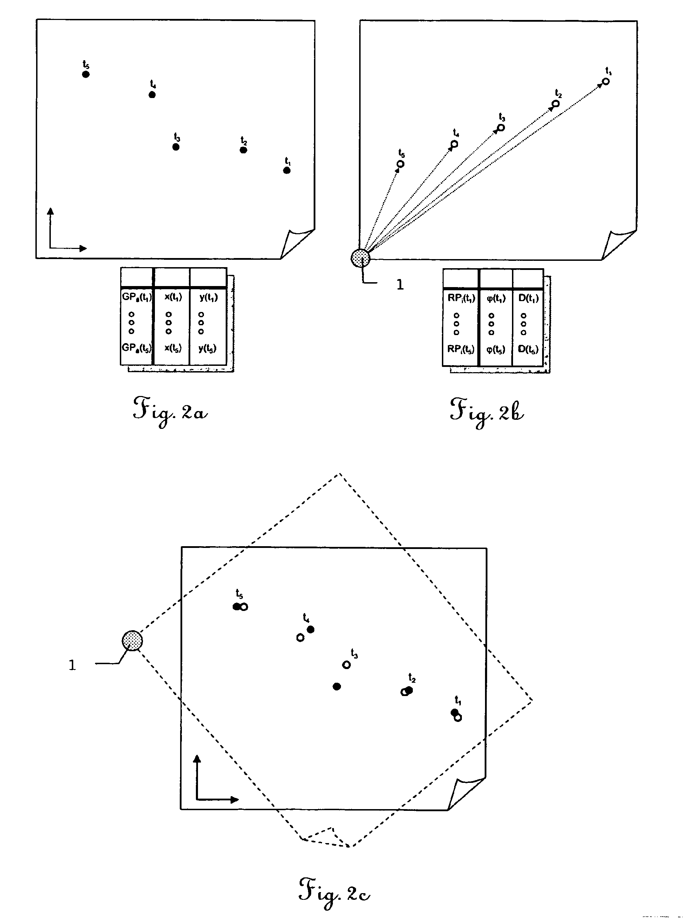

Fig.2a-c veranschaulichen beispielhaft im Zweidimensionalen ein Bestimmen von GNSS-Positionen GP_{ä} und Relativpositionen RPᵢ der Arbeitsmaschine für bekannte, jeweils gleiche Zeitpunkte t_{1,}t₂,... und das Ableiten einer ausgeglichenen Beziehung. In Fig.2a sind die GNSS-Positionen GP_{ä} im äusseren Bezugssystem dargestellt und in Fig.2b die Totalstation 1 mit den im inneren Bezugssystem durch Messen eines Winkels ϕ und Entfernung D erhaltenen Relativpositionen RPᵢ.

Zum Stationieren der Totalstation 1 soll eine ausgeglichene Beziehung zwischen innerem und äusserem Bezugssystem abgeleitet werden. Dazu werden die jeweils für gleiche Zeitpunkte bestimmte GNSS- und Relativpositionen einander zugeordnet und miteinender verknüpft. Als Veranschaulichung könnte man nun zum Herleiten der ausgeglichenen Beziehung die Relativpositionspunkte RPᵢ auf eine Klarsichtfolie auftragen und diese solange auf einer Karte mit den eingezeichneten GNSS-Positionen GP_{ä} verschieben, bis die sich jeweils zugeordneten Positionen RPᵢ(t₁) und GP_{ä}(t₁), RPᵢ(t₂) und GP_{ä}(t₂),... im Mittel möglichst gut aufeinander passen und übereinstimmen, wie es beispielhaft in Fig.2c gezeigt ist.

Dieses Prinzip kann nun nicht graphisch, sondern analytisch angewandt werden, zum Beispiel anhand einer Ausgleichsrechnung nach der Methode der kleinsten Quadrate.

Die zweidimensionale Darstellung ist hier rein aufgrund der einfacheren Veranschaulichung gewählt, so kann dieses Prinzip gleichermassen im Dreidimensionalen verwendet werden.

Ebenso ist in diesem Beispiel zur Vereinfachung nur eine Bestimmung von GNSS- und Relativpositionen jeweils für gleiche Zeitpunkte gezeigt. Zwischen diesen Zeitpunkten können sowohl weitere Relativpositionen als auch weitere GNSS-Positionen bestimmt werden, die nicht zum Ableiten der ausgeglichenen Beziehung verwendet werden. Zusätzlich bestimmte Relativpositionen oder davon abhängige Grössen können klarerweise dennoch anhand der abgeleiteten ausgeglichenen Beziehung in das äussere Bezugssystem transformiert und für die absolute Positionierung der Arbeitsmaschine benutzt werden. Insbesondere können auch die für gleiche Zeitpunkte bestimmten, einander zuzuordnenden GNSS- und Relativpositionen als Positionspaare, die für das Ableiten der ausgeglichenen Beziehung herangezogen werden, nach gewissen Kriterien, zum Beispiel Zeitintervalle, Entfernung zum vorherigen Positionspaar, Messwinkel von der Totalstation aus, ausgewählt werden.

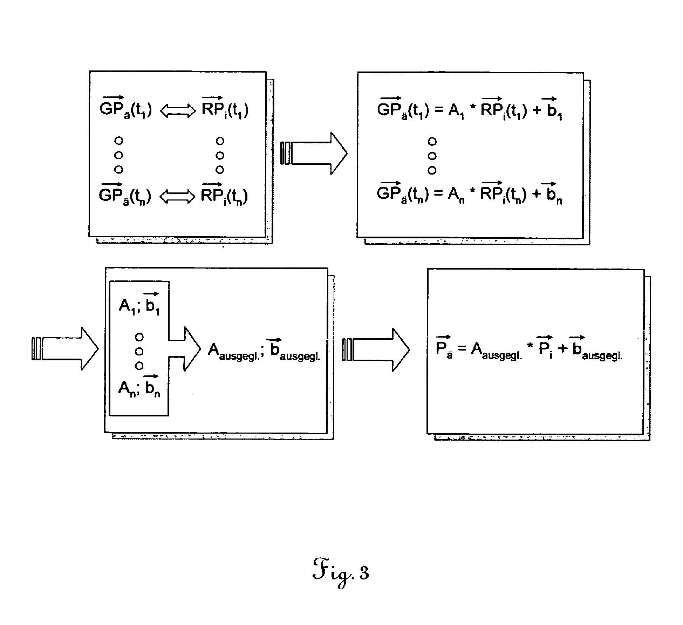

Fig.3 zeigt ein Beispiel für ein analytisches Ableiten der ausgeglichenen Beziehung aus einander paarweise zugeordneten, jeweils für gleiche Zeitpunkte bestimmten GNSS- und Relativpositionen als Positionspaare RPᵢ(t₁) und GP_{ä}(t₁), RPᵢ(t₂) und GP_{ä}(t₂),..., RPᵢ(tₙ) und GP_{ä}(tₙ). Für jedes Positionspaar können nun jeweils die Transformationsgleichungen, die im zweiten Kästchen von Fig.3 gezeigt sind, mit den jeweiligen Transformationsmatrizen A1, A2,..., An und Verschiebungsvektoren b1, b2,..., bn aufgestellt werden. Da dieses Gleichungssystem - sofern mehr als zwei Positionspaare bestimmt und zugeordnet sind - überbestimmt ist, werden daraus ausgeglichene Transformationsparameter mit der ausgeglichenen Matrix A_{ausgegl}. und dem ausgeglichenen Verschiebungsvektor b_{ausgegl}. abgeleitet. Mittels dieser ausgeglichenen Transformationsparameter lassen sich nun sämtliche im inneren Bezugssystem definierten Grössen, insbesondere die bestimmten Relativpositionen oder die Position der Totalstation, in das äussere Bezugssystem transformieren.

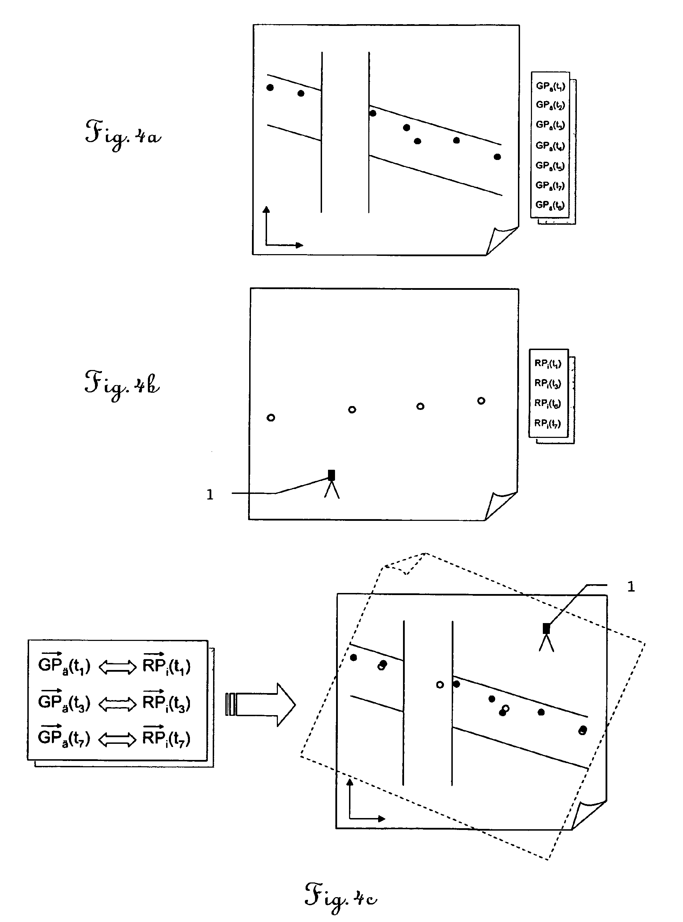

Fig.4a-c zeigen ein weiteres Beispiel für die Anwendung des erfindungsgemässen Verfahrens. So werden für die bekannten Zeitpunkte t₁, t₂, t₃, t₄, t₅, t₇ und t₈ jeweils GNSS-Positionen GP_{ä}(t₁),... anhand eines GNSS-Empfängers einer mobilen Arbeitsmaschine im äusseren Bezugssystem bestimmt. Die GNSS-Positionen und eine Strasse, auf welcher sich die mobile Arbeitsmaschine fortbewegt, sowie eine über diese Strasse führende Brücke sind im Diagramm in Fig.4a eingetragen.

Des Weiteren werden durch eine an einer beliebigen unbekannten Position im Gelände aufgestellte Totalstation 1 nebenher jeweils für die Zeitpunkte t₁, t₃, t₆ und t₇ Relativpositionen eines an der Arbeitsmaschine angebrachten Reflektors bestimmt.

Die jeweils für die gleichen Zeitpunkte t₁, t₃ und t₇ bestimmten GNSS- und Relativpositionen werden paarweise einander zugeordnet und verknüpft, was im linken Kästchen von Fig.4c gezeigt ist. Aus diesen Verknüpfungen werden - wie vorgängig beschrieben - ausgeglichene Transformationsparameter abgeleitet, anhand welcher alle Relativpositionen und die Position der Totalstation 1 ins äussere Bezugssystem transformierbar sind. Graphisch ist dies wieder durch das Drehen und Verschieben einer Klarsichtfolie, auf welcher die Relativpositionen von der Totalstation aus aufgezeichnet sind, auf einer das äussere Bezugssystem darstellenden Karte mit den GNSS-Positionen veranschaulicht, wobei das Drehen und Verschieben der Folie so erfolgt, dass sich die Positionspaare möglichst gut decken. Dadurch können die durch GNSS bestimmten absoluten Positionen der Arbeitsmaschine mittels transformierter Relativpositionen verbessert und absolute Positionen sowohl beispielsweise für den Zeitpunkt t₆, zu dem sich die Arbeitsmaschine unter der Brücke befindet, als auch für die Totalstation 1 bereitgestellt werden.

Wie aus dem Stand der Technik bekannt, kann aus den bestimmten absoluten Positionen nun ein wahrer zurückgelegter Weg der Arbeitsmaschine genähert werden.

Sobald für einen weiteren Zeitpunkt ein Positionspaar bestimmt wird, können die ausgeglichenen Transformationsparameter aktualisiert abgeleitet werden. Anhand dieser aktualisierten Transformationsparameter können nun auch wieder rückwirkend für frühere Zeitpunkte bestimmte Relativpositionen erneut aktualisiert in das äussere Bezugssystem transformiert und somit verbessert werden. Auch die Näherung für den wahren zurückgelegten Weg kann nach jeder Aktualisierung wieder erneut und aktualisiert berechnet werden.

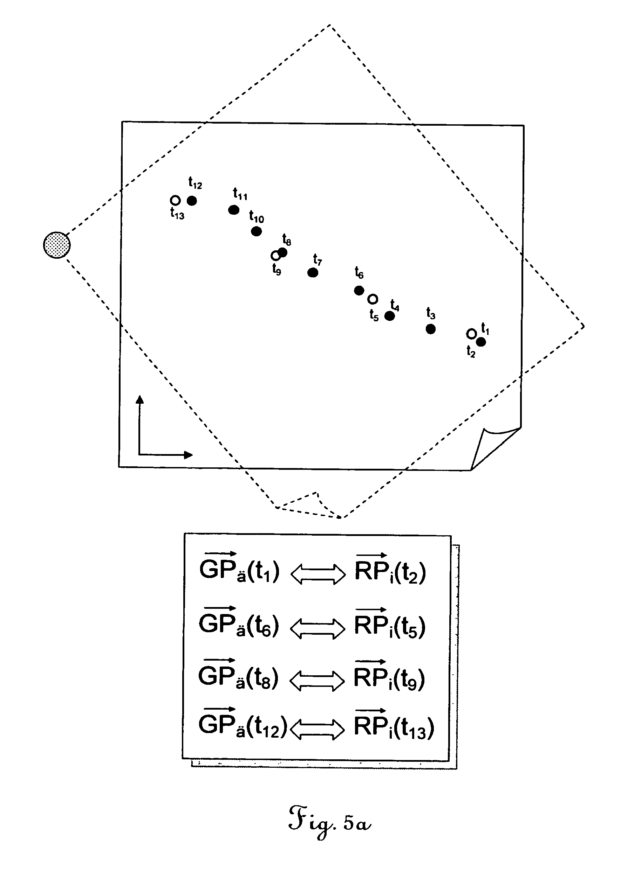

In Fig. 5a-b wird das Zuordnen von Relativ- und GNSS-Positionen, die innerhalb eines zeitlichen Fensters liegen, anhand von zwei Beispielen für unterschiedliche Raten bei der Bestimmung von GNSS- und Relativpositionen beim erfindungsgemässen Positionsbestimmungsverfahren erläutert. Hierbei werden Relativ- und GNSS-Positionen einander zugeordnet, die innerhalb eines zeitlichen Fensters liegen, wobei die Länge des zeitlichen Fensters in Abhängigkeit von der Dynamik der Einheit und der Genauigkeit der zu bestimmenden Position gewählt wird,

Fig.5a zeigt eine Folge von gemessenen GNSS-Positionen als schwarze Punkte und Relativpositionen als weisse Punkte. Da beide Messungen unabhängig voneinander und mit verschiedenen Raten erfolgen, kann eine Zuordnung aufgrund eines identischen Messzeitpunktes, d.h. einer strengen Gleichzeitigkeit, nicht mehr erfolgen. Im dargestellten Beispiel werden die GNSS-Positionen für die Zeitpunkte t₁, t₃, t₄, t₆, t₇, t₈, t₁₀, t₁₁ und t₁₂ aufgenommen, wohingegen die Relativpositionen zu den Zeitpunkten t₂, t₅, t₉ und t₁₃ bestimmt werden. Nun wird eine gemilderte Gleichzeitigkeit zugelassen, bei der Positionen einander zugeordnet werden, die innerhalb eines zeitlichen Fensters bzw. mit einem maximalen zeitlichen Abstand zueinander erfolgt sind. Das Zuordnen erfolgt paarweise für jeweils eine gemessene Relativposition und jeweils eine gemessene GNSS-Position, d.h. einer GNSS-Position wird genau eine Relativposition zugeordnet, soweit eine solche innerhalb des Zeitfensters identifiziert werden kann. Im konkreten Beispiel wird der zum Zeitpunkt t₁ aufgenommenen GNSS-Position die Relativposition des Zeitpunkts t₂ bzw. t₆ zu t₅, t₈ zu t₉ und t₁₂ zu t₁₃ zugeordnet.

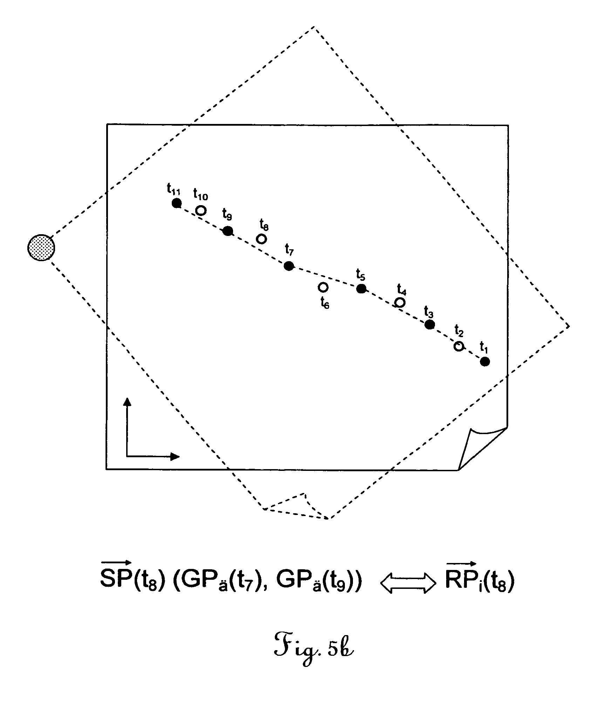

Fig.5b erläutert eine Variante, bei der beim Zuordnen mindestens eine der Relativ- oder GNSS-Positionen als synthetische Position aus benachbarten gemessenen Relativ- bzw. GNSS-Positionen erzeugt wird. Die hier dargestellten Raten von GNSS- und Relativpositionen und die entsprechenden Zuordnungsverhältnisse sind rein exemplarisch zu verstehen. Im dargestellten Beispiel werden die GNSS-Positionen für die Zeitpunkte t₁, t₃, t₅, t₇, t₉, und t₁₁ aufgenommen, wohingegen die Relativpositionen zu den Zeitpunkten t₂, t₄, t₆, t₈ und t₁₀ bestimmt werden. Um eine Zuordnung zu ermöglichen, können synthetische Positionen aus den Positionen bestimmt bzw. berechnet werden, was hier am Beispiel der GNSS-Positionen veranschaulicht wird. Zwischen den gemessenen GNSS-Positionen werden synthetische Punkte als Funktion SP (GP_{ä}(tᵢ), GP_{ä}(tᵢ₊ⱼ)) der benachbarten gemessenen Positionen zu den Zeitpunkten tᵢ und tᵢ₊ⱼ abgeleitet, was hier rein exemplarisch für die Punkte t₇ und t₉ dargestellt ist. Eine solche synthetische Position kann beispielsweise als auf der Verbindungsgeraden der beiden benachbarten Positionen liegend bestimmt werden, wobei diese Geraden in Fig.5b gestrichelt dargestellt sind. Die genaue Lage kann auf verschiedene Weise ermittelt werden. Zum Beispiel kann die Gerade zeitlich linear oder nichtlinear parametrisiert werden. Bei einer konstanten Geschwindigkeit der bewegten Einheit kann dann der Ort als synthetische Position zum Zeitpunkt der zuzuordnenden Relativposition, hier zum Zeitpunkt t₈, berechnet werden. Die so bestimmte synthetische Position kann dann der Relativposition des Zeitpunktes t₈ zugeordnet werden.

Erfolgen Beschleunigungen oder Bremsbewegungen, so kann dies beispielsweise in einer Ort-Zeitfunktion berücksichtigt werden. Bei hohen Raten und nur geringen Geschwindigkeitsvariationen kann auch eine einfache Positionsbestimmung erfolgen, indem als synthetische Position eine fixe Teilung der Geraden erfolgt, z.B. eine Halbierung. Dies ist beispielsweise bei entsprechenden Verhältnissen der Aktualisierungsraten der Positionsmessungen vorteilhaft, beispielsweise bei einem Verhältnis von 1 : 2. In diesem Fall können die Positionsbestimmungen so synchronisiert werden, dass für jede zweite der mit der höheren Rate erfolgenden Positionsbestimmung eine zeitlich korrelierte Positionsbestimmung des anderen Systems vorliegt. Für die jeweils andere Position kann durch Halbierung der Gerade eine synthetische Position abgeleitet werden.

Auch können die Ansätze von Fig.5a und 5b miteinander kombiniert werden, z.B. indem zwischen zwei GNSS-Positionen die der zuzuordnenden Relativposition nächstgelegene synthetische Position auf der Verbindungsgeraden ermittelt und die korrespondierende Zeit, zu der diese Positionsbestimmung hätte erfolgen müssen, berechnet wird. Schliesslich wird überprüft, ob diese Zeit innerhalb des gesetzten Zeitfensters um die zuzuordnende Relativposition liegt. In ähnlicher Weise können verschiedene Gewichtungs- oder Berechnungsfunktionen zur Zuordnung verwendet werden.

Es versteht sich, dass diese dargestellten Figuren nur mögliche Ausführungsbeispiele schematisch darstellen. Die verschiedenen Ansätze können erfindungsgemäss miteinander sowie mit Verfahren des Stands der Technik kombiniert werden. Auch können nach der erfolgten Bestimmung der gemeinsamen Punkte, d.h. Zuordnung von Referenz- zu Bezugspunkten, bisherige Verfahren zur Berechnung des Stationierungspunktes zur Anwendung kommen.

## Patentansprüche

1. Positionsbestimmungsverfahren mit
• einer ihre Position verändernden Einheit, insbesondere einer Arbeitsmaschine (4), mit
• einem GNSS-Empfänger (2) und
• einem optisch anmessbaren Bezugspunkt (A), insbesondere Rundumprisma (3), mit fester räumlicher Beziehung relativ zum GNSS-Empfänger (2) und
• einem eine Entfernungs- und Richtungsmessfunktionalität, insbesondere Winkelmessfunktionalität aufweisenden geodätischen Gerät, insbesondere einer Totalstation (1),
und den Schritten
• Erzeugen von zeitlich korrelierten Positionspaaren mittels
□ einem Messen von
• Relativpositionen des Bezugspunktes (A) in einem inneren Bezugssystem durch optisches Messen von jeweils
(a) Entfernung und
(b) wenigstens einem Winkel von dem geodätischen Gerät zum anmessbaren Bezugspunkt (A) und
• GNSS-Positionen des GNSS-Empfängers in einem äusseren Bezugssystem,
□ einem Zuordnen von Relativ- und GNSS-Positionen, die innerhalb eines zeitlichen Fensters liegen, insbesondere zum gleichen Zeitpunkt bestimmt werden,
• Ableiten einer ausgeglichenen Beziehung zwischen dem äusseren und dem inneren Bezugssystem, insbesondere ausgeglichener Transformationsparameter, mittels einer Ausgleichsrechnung aus den Positionspaaren, und
• Bestimmen der Position der Einheit, des geodätischen Geräts und/oder eines anmessbaren Neupunktes aus der ausgeglichenen Beziehung.

2. Positionsbestimmungsverfahren nach Anspruch 1,
**dadurch gekennzeichnet, dass**
das Zuordnen paarweise für jeweils eine gemessene Relativposition und jeweils eine gemessene GNSS-Position erfolgt.

3. Positionsbestimmungsverfahren nach Anspruch 1,
**dadurch gekennzeichnet, dass**
beim Zuordnen mindestens eine der Relativ- oder GNSS-Positionen als synthetische Position aus benachbarten gemessenen Relativ- bzw. GNSS-Positionen erzeugt wird.

4. Positionsbestimmungsverfahren nach einem der vorangehenden Ansprüche,
**dadurch gekennzeichnet, dass**
die Schritte fortlaufend durchgeführt werden, insbesondere wobei nach jedem weiteren Erzeugen eines Positionspaares die ausgeglichene Beziehung unter Berücksichtigung des neuen Positionspaares aktualisiert abgeleitet wird.

5. Positionsbestimmungsverfahren nach Anspruch 4,
**dadurch gekennzeichnet, dass**
das Erzeugen in einem definierten Rhythmus, insbesondere mit zeitlich gleichen Abständen, erfolgt.

6. Positionsbestimmungsverfahren nach einem der vorangehenden Ansprüche,
**dadurch gekennzeichnet, dass**
die Schritte im Wesentlichen in Echtzeit und automatisch erfolgen.

7. Positionsbestimmungsverfahren nach einem der vorangehenden Ansprüche,
**dadurch gekennzeichnet, dass**
beim Bestimmen der Position mindestens erfolgt
• ein Transformieren von mit den Relativpositionen verknüpften Grössen des inneren Bezugssystem anhand der abgeleiteten Beziehung in das äussere Bezugssystem und
• ein Korrigieren der GNSS-Positionen anhand der ins äussere Bezugssystem transformierten Grössen.

8. Positionsbestimmungsverfahren nach Anspruch 7,
**dadurch gekennzeichnet, dass**
als Grössen die Relativpositionen selbst transformiert werden.

9. Positionsbestimmungsverfahren nach Anspruch 8 oder 9, **dadurch gekennzeichnet, dass**
als Grössen
• Relativpositionskomponenten, insbesondere Höhenpositionskomponenten,
• Relativpositionsänderungsvektoren und/oder
• aus den Relativpositionen abgeleitete Geschwindigkeitsvektoren
transformiert werden.

10. Positionsbestimmungsverfahren nach Anspruch 8,
**dadurch gekennzeichnet, dass**
als Grösse eine relative Geräteposition des geodätischen Geräts transformiert wird.

11. Positionsbestimmungsverfahren nach Anspruch 8,
**dadurch gekennzeichnet, dass**
als Grösse eine relative Neupunktposition eines anmessbaren Neupunktes transformiert wird.

12. Positionsbestimmungsverfahren nach einem der Ansprüche 8 bis 12,
**dadurch gekennzeichnet, dass**
das Transformieren nach einem, insbesondere jedem, aktualisierten Ableiten der ausgeglichenen Beziehung erneut erfolgt.

13. Positionsbestimmungsverfahren nach einem der vorangehenden Ansprüche,
**dadurch gekennzeichnet, dass**
die ausgeglichene Beziehung anhand einer Ausgleichsrechnung der einzelnen Beziehungen zwischen den einander zugeordneten GNSS- und Relativpositionen, insbesondere nach der Methode der kleinsten Quadrate, berechnet wird.

14. Positionsbestimmungsverfahren nach einem der vorangehenden Ansprüche,
**dadurch gekennzeichnet, dass**
die Länge des zeitlichen Fensters in Abhängigkeit von der Dynamik der Einheit und der Genauigkeit der zu bestimmenden Position gewählt wird.

## Claims

1. Position determination method comprising
• a unit which changes its position, in particular a working machine (4), comprising
° a GNSS receiver (2) and
° an optically measurable reference point (A), in particular all-round prism (3) , having a fixed spatial relationship relative to the GNSS receiver (2) and
• a geodetic device having a distance and direction measuring functionality, in particular angle measuring functionality, in particular a total Station (1) ,
and the steps
• generation of chronologically correlated position pairs by means of
***o*** measurement of
- relative positions of the reference point (A) in an internal reference system by optical measurement of in each case a) distance and
- b) at least one angle from the geodetic device to the measurable reference point (A) and
- GNSS positions of the GNSS receiver in an external reference system,
• coordination of relative and GNSS positions which lie within a time window, in particular are determined at the same time,
• derivation of a fitted relationship between the external and the internal reference system, in particular fitted transformation parameters, by means of an fit calculation from the position pairs, and
• determination of the position of the unit, of the geodetic device and/or of a measurable new point from the fitted relationship.

2. Position determination method according to Claim 1, **characterized in that** the coordination in pairs is effected for in each case a measured relative position and in each case a measured GNSS position.

3. Position determination method according to Claim 1, **characterized in that**, on coordination, at least one of the relative or GNSS positions is generated as a synthetic position from adjacent measured relative and GNSS positions, respectively.

4. Position determination method according to any of the preceding claims, **characterized in that** the steps are carried out continuously, in particular the fitted relationship being derived in updated form after each further generation of a position pair, taking into account the new position pair.

5. Position determination method according to Claim 4, **characterized in that** the generation is effected in a defined rhythm, in particular with chronologically identical intervals.

6. Position determination method according to any of the preceding claims, **characterized in that** the steps take place substantially in real time and automatically.

7. Position determination method according to any of the preceding claims, **characterized in that**, on determination of the position, at least
• a transformation of quantities of the internal reference system which are linked to the relative positions, on the basis of the derived relationship, into the external reference system and
• a correction of the GNSS positions on the basis of the quantities transformed into the external reference system are effected.

8. Position determination method according to Claim 7, **characterized in that** the relative positions themselves are transformed as quantities.

9. Position determination method according to Claim 8 or 9, **characterized in that**
• relative position components, in particular vertical position components,
• relative position change vectors and/or
• speed vectors derived from the relative positions are transformed as quantities.

10. Position determination method according to Claim 8, **characterized in that** a relative device position of the geodetic device is transformed as a quantity.

11. Position determination method according to Claim 8, **characterized in that** a relative new point position of a measurable new point is transformed as a quantity.

12. Position determination method according to any of Claims 8 to 12, **characterized in that** the transformation is effected again after an updated derivation, in particular each updated derivation, of the fitted relationship.

13. Position determination method according to any of the preceding claims, **characterized in that** the fitted relationship is calculated on the basis of a fit calculation of the individual relationships between the GNSS and relative positions coordinated with one another, in particular by the least Squares method.

14. Position determination method according to any of the preceding claims, **characterized in that** the length of the time window is chosen as a function of the dynamics of the unit and the accuracy of the position to be determined.

## Revendications

1. Procédé de détermination de position avec
• une unité qui modifie sa position, en particulier une machine de travail (4) avec
□ un récepteur GNSS (2) et
□ un point de référence pouvant être mesuré optiquement (A), en particulier un prisme à 360 degrés (3), avec une relation spatiale fixe par rapport au récepteur GNSS (2) et
• un appareil géodésique qui présente une fonctionnalité de mesure de distance et de direction, en particulier une fonctionnalité de mesure d'angle, en particulier une station totale (1)
et les étapes de
• production de paires de positions corrélées dans le temps au moyen
□ d'une mesure de
positions relatives du point de référence (A) dans un système de référence intérieur par mesure optique de respectivement
(a) la distance et
(b) au moins un angle
de l'appareil géodésique au point de référence pouvant être mesuré (A) et
de positions GNSS du récepteur GNSS dans un système de référence extérieur,
□ d'une correspondance de positions relatives et de positions GNSS qui se situent à l'intérieur d'une fenêtre de temps, en particulier qui sont déterminées au même moment,
• dérivation d'une relation égalisée entre le système de référence extérieur et le système de référence intérieur, en particulier de paramètres de transformation égalisés au moyen d'un calcul d'égalisation à partir des paires de positions et
• détermination de la position de l'unité, de l'appareil géodésique et/ou d'un point nouveau pouvant être mesuré à partir de la relation égalisée.

2. Procédé de détermination de position selon la revendication 1,
**caractérisé en ce que** la correspondance se fait par paires pour respectivement une position relative mesurée et respectivement une position GNSS mesurée.

3. Procédé de détermination de position selon la revendication 1,
**caractérisé en ce que**, lors de la correspondance, au moins l'une des positions relatives ou GNSS est produite comme position synthétique à partir de positions relatives ou GNSS mesurées voisines.

4. Procédé de détermination de position selon l'une des revendications précédentes,
**caractérisé en ce que** les étapes sont exécutées en continu, en particulier cependant qu'après chaque production d'une paire de positions la relation égalisée est dérivée en étant actualisée en tenant compte de la nouvelle paire de positions.

5. Procédé de détermination de position selon la revendication 4,
**caractérisé en ce que** la production se fait dans un rythme défini, en particulier avec des écarts de temps égaux.

6. Procédé de détermination de position selon l'une des revendications précédentes,
**caractérisé en ce que** les étapes se font essentiellement en temps réel et automatiquement.

7. Procédé de détermination de position selon l'une des revendications précédentes,
**caractérisé en ce que**, lors de la détermination de la position, au moins
• une transformation de grandeurs associées aux positions relatives du système de référence intérieur à l'aide de la relation dérivée dans le système de référence extérieur et
• une correction des positions GNSS à l'aide des grandeurs transformées dans le système de référence extérieur
sont réalisées.

8. Procédé de détermination de position selon la revendication 7,
**caractérisé en ce que** les positions relatives elles-mêmes sont transformées comme grandeurs.

9. Procédé de détermination de position selon la revendication 8,
**caractérisé en ce que**
• des composantes de positions relatives, en particulier les composantes de positions de hauteur,
• des vecteurs de changement de position relative et/ou
• des vecteurs de vitesse dérivés des positions relatives
sont transformés comme grandeurs.

10. Procédé de détermination de position selon la revendication 8,
**caractérisé en ce qu'**une position relative d'appareil de l'appareil géodésique est transformée comme grandeur.

11. Procédé de détermination de position selon la revendication 8,
**caractérisé en ce qu'**une position relative de point nouveau d'un point nouveau pouvant être mesuré est transformée comme grandeur.

12. Procédé de détermination de position selon l'une des revendications précédentes 8 à 12,
**caractérisé en ce que** la transformation a lieu à nouveau après une, en particulier après chaque dérivation actualisée de la relation égalisée.

13. Procédé de détermination de position selon l'une des revendications précédentes,
**caractérisé en ce que** la relation égalisée est calculée à l'aide d'un calcul d'égalisation des relations individuelles entre les positions GNSS et relatives correspondant l'une à l'autre, en particulier selon la méthode des moindres carrés.

14. Procédé de détermination de position selon l'une des revendications précédentes,
**caractérisé en ce que** la longueur de la fenêtre de temps est choisie en fonction de la dynamique de l'unité et de l'exactitude de la position à déterminer.
